# EUROPEAN PATENT APPLICATION

(11) **EP 4 589 508 A1**
(43) Date of publication of application: **23.07.2025**
(21) Application number: 24153071.6
(22) Date of filing: 22.01.2024
(51) Int. Cl.: G06Q 10/087, B65G 1/04

(54) **CONTROL METHOD FOR AN AUTOMATED STORAGE AND RETRIEVAL SYSTEM**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a computer-implemented method performed by a controller of an automated storage and retrieval system. The method comprises predicting a future picking event associated with the automated storage and retrieval system. The method further comprises identifying that a first storage container and a second storage container of the automated storage and retrieval system are correlated with the predicted future picking event. Responsive to identifying the correlation, the method comprises causing the first and second storage containers to be stored within a same multi-container frame of the automated storage and retrieval system.

## Description

### TECHNICAL FIELD

The disclosure relates to a control method for an automated storage and retrieval system. More particularly, it relates to predicting a future picking event associated with the automated storage and retrieval system and identifying storage containers associated with the predicted picking event.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. During picking events, the container-handling vehicles are configured to transport containers from the grid and to deliver them to ports or stations at the periphery of the grid so that the goods within the container or the container as a whole can be extracted, packed and shipped.

A control system, which may include a Warehouse Management System, controls the movement of the container-handling vehicles and determines the movement of containers around the storage and retrieval system. In particular, in response to a picking order request identifying that a particular container or an item from the container is required to be picked, the control system may instruct a container-handling vehicle to fetch the container in question from the grid.

Inefficiencies in the storage and retrieval system can arise as a result of containers in the grid being stored in non-optimal locations. This can lead to increased picking times, in other words the time it takes for a container or item from a container to be delivered to an access point such as a port can be undesirably long. It would be advantageous to provide systems or methods which address these inefficiencies in existing storage and retrieval systems.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage and retrieval system comprising a grid and a plurality of robotic container-handling vehicles configured to retrieve and/or rearrange containers of goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C shows a bottom perspective view of the robot of Fig. 3B, wherein a lifting device of the robot is visible;
Fig. 3D is a perspective side view of the robot of Figs. 3B and 3C;
Fig. 4 shows a computing device for implementing the operations described herein;
Fig. 5 shows a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with a multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig 12. shows a container-handling vehicle lifting a container out of a multi-container frame;
Fig. 13 shows a method of storing containers within a multi-container frame based on a predicted future picking event;
Fig. 14 shows a method of reserving a position within a multi-container frame when a container is removed from the multi-container frame during a picking event; and
Fig. 15 shows a method of ensuring first and second storage containers are kept together during a picking event that causes the first and second storage containers to be removed from a multi-container frame.

### DETAILED DESCRIPTION

In overview, the disclosure relates to predicting a future picking event and using this prediction to store containers in the automated storage and retrieval system of the present disclosure more efficiently. In particular, the disclosure relates to multi-container frames which are configured to hold a plurality of containers. The multi-container frames may take any suitable form. For example, the multi-container frames may themselves comprise a container or may comprise a framework configured to accommodate containers therein within a cell of the storage and retrieval system grid. The multi-container frames can thereby be handled and stored within the grid of the automated storage and retrieval system similarly to any other container. The present inventors have recognised that, by predicting future picking events, containers can be intelligently stored within such multi-container frames. In particular, containers that are likely to be involved in the same future picking event can be stored together within the same multi-container frame such that when the predicted future picking event occurs, the two related containers can be quickly obtained and the picking order can be fulfilled. As a result, picking orders can be fulfilled more quickly, there is less requirement for "digging" or rearranging of other containers and the efficiency of the automated storage and retrieval system is improved.

In more detail, according to a first aspect there is disclosed a computer-implemented method performed by a controller of an automated storage and retrieval system. The method comprises predicting a future picking event associated with the automated storage and retrieval system. A picking event in this context comprises one or more containers being lifted or "picked" from the grid of the automated storage and retrieval system such that the one or more containers, or items within them, can be used to fulfil an order received by the storage and retrieval system. For example, if an order is received for a banana, a picking event will be carried out during which a container containing bananas is fetched from the grid of the automated storage and retrieval system. The required banana can then be removed from the container to fulfil the order, and the container can be returned to the grid. Alternatively, if the order is of a sufficiently large quantity, then the entire container of bananas may be removed from the grid. Predicting future picking events like these can be performed in a number of ways, as will be described in further detail below.

Irrespective of how the future picking event is predicted, the method further comprises identifying that a first storage container and a second storage container of the automated storage and retrieval system are correlated with the predicted future picking event. Specifically, the method may comprise identifying that the first and second storage containers are predicted to be picked during the future picking event. Responsive to identifying this correlation, the method comprises causing the first and second storage containers to be stored within a same multi-container frame of the automated storage and retrieval system. In other words, the first and second containers are stored within a same, single multi-container frame in a cell of the grid.

By strategically storing the storage containers together in this manner, the disclosed method ensures that containers that are identified as being correlated can be stored in close proximity to one another. This facilitates simple and efficient fulfilment of picking orders. In particular, when the predicted picking event comes to pass, the first and second storage containers are already stored close to one another. This makes it easy for a container-handling vehicle of the storage and retrieval system to locate and extract both storage containers quickly and deliver them to an appropriate location for fulfilment of the order. There is no need for the container-handling vehicle to traverse to different parts of the grid to find the relevant storage containers. Where "digging" or re-arrangement of containers is required, this only needs to be performed once because the first and second storage containers are stored in the same location within the grid. Accordingly, the disclosed method enables a significant improvement in picking efficiency within the automated storage and retrieval system.

As already noted, the predicted future picking event can be predicted in a number of ways. In one example, the future picking event may be predicted based on historical picking event data indicative of which containers have been picked from during one or more previous picking events. The term "historical picking data" in this context simply means data indicative of which containers have been picked during previous picking events. The term "historical" should not be interpreted as implying any particular age of the data, but simply means data relating to events in the past. The historical picking data may be updated frequently and may include data relating to picking events that have occurred in the past day, hour or even in the past few seconds. Picking data of this nature can be recorded by automated storage and retrieval systems such as that of the present disclosure, and can be analysed to detect trends and patterns. From these trends and patterns, correlations between containers stored within the automated storage and retrieval system can be identified. More particularly, predictions can be made about which containers are likely to be involved in future picking events, based on which containers have been involved in past picking events.

In one such example, identifying that the first and second storage containers are correlated with the predicted future picking event comprises identifying that the first and second storage containers have previously been picked from as part of a same picking event. In an illustrative example, the historical picking data may indicate that containers #0001 and #0002 have been picked from as part of the same picking event multiple times. This may occur, for example, when containers #0001 and #0002 contain items that are frequently purchased together. The automated storage and retrieval system need not necessarily know what the items in question are to determine that they are frequently picked together. As a result of this trend, it can be predicted that containers #0001 and #0002 are likely to be picked from as part of the same picking event again in future. This prediction thus comprises an example of the predicted future picking event, on the basis of which containers #0001 and #0002 are identified as being correlated and are caused to be stored within the same single multi-container frame.

In some examples, identifying that the first and second storage containers are correlated with the predicted future picking event comprises identifying that the first and second storage containers have previously been picked from as part of a same picking event at least a threshold number of times. For example, to continue the illustrative example of the previous paragraph, it may be determined that containers #0001 and #0002 have been picked from in the same picking event at least N times, where N is the threshold set by the system for indicating that there is a correlation between containers. In some examples, the threshold number of times is at least twenty.

In some implementations, the step of predicting the future picking event is performed by a machine learning model configured to predict future picking events based on historical picking event data. In other words, a machine learning model can be provided with historical picking event data as an input. Based on this, the machine learning model can be trained (either via supervised or unsupervised learning) to detect correlations between containers in the historical picking data. Once trained, the machine learning model can then be used to predict future correlations between containers and future predicted picking events.

In some implementations, the predicted future picking event is additionally or alternatively predicted based on specific forms of input data. For example, the predicted future picking event may be based on a user input specifying one or more items associated with the predicted future picking event. For example, a user may know that a store associated with the storage and retrieval system is about to launch a discount on sandals and sunglasses. The user may therefore provide a suitable input to the system, indicating that sales of sandals and sunglasses are expected to increase within a given time window. The system can use this data to determine the predicted future picking event, for example to predict that a future picking event involving both sunglasses and sandals is likely to occur.

Alternatively or additionally, a predicted future picking event may be predicted by the system based on a future date or time. For example, the system may be made aware (either through a user input or by analysing data) that picking events involving pizza and beer are more frequent on a Friday evening. Accordingly, the system may predict a future picking event involving both pizza and beer to occur on the next upcoming Friday between 5pm and 12pm.

Future picking events may also be based on meteorological data. For example, the system may identify that when the outdoor temperature increases above a certain temperature, picking events related to cold drinks and watermelons increase. Accordingly, when the outdoor temperature increases above the threshold temperature, the system may predict a future picking event involving both a cold drink and a watermelon.

Where a machine learning model is used to implement the disclosed methods, the user input, time, date and/or meteorological data can also be provided as an input to the machine learning model and the predicted picking events and container correlations may be predicted by the machine learning model at least partly based on this input data.

These predicted future picking events associated with a user input, a time, a date and/or meteorological data can all be used in the disclosed method to arrange the containers within the storage and retrieval system more efficiently. For example, in the respective illustrative examples outlined above, the predicted future picking events may cause containers containing sandals and sunglasses to be stored together in a same multi-container frame. The same may be done with containers containing pizza and beer and containers containing cold drinks and watermelons respectively. It will be appreciated that these are merely illustrative examples of how the present system can be implemented.

As already noted, the controller of the automated storage and retrieval system may know which items are stored within each container, or it may simply treat the containers as "black boxes". In cases where the system does know about the contents of each container, then identifying that the first and second storage containers are correlated with the predicted future picking event may comprise identifying that: i) a first product associated with the predicted future picking event is stored in the first storage container; and ii) a second product associated with the predicted future picking event is stored in the second storage container. For example, the system may identify that container #0001 contains pizzas and container #0002 contains beer cans. Based on this, the system may then identify that containers #0001 and #0002 are correlated with a future predicted picking event involving both pizza and beer such as the illustrative example described above.

In some cases, the automated storage and retrieval system may generate all predictions based on picking data or other information associated with or generated by that specific automated storage and retrieval. Alternatively, however, data from multiple automated storage and retrieval system sites can be pooled to provide a greater volume of data to analyse. This can make it easier to spot trends and correlations between containers. Accordingly, in some implementations the future picking event is predicted based on historical picking event data associated with one or more additional automated storage and retrieval systems. Where a machine learning model is used, the pooled data from multiple automated storage and retrieval sites can be used as part of the training data and/or the data analysed to predict future picking events and container correlations.

It will be appreciated that the step of causing the first and second storage containers to be stored within the same multi-container frame can be carried out in a variety of ways, depending on how the storage and retrieval system is configured. In some implementations, causing the first and second storage containers to be stored within the same multi-container frame may comprise transmitting instructions to a Warehouse Management System to cause the first and second storage containers to be placed within the multi-container frame. In some implementations, causing the first and second storage containers to be stored within the same multi-container frame may additionally or alternatively comprise transmitting instructions to cause a container-handling vehicle to place the first and second storage containers within the multi-container frame.

As will be described in detail below, containers can be stored within multi-container frames in any suitable way. In some implementations, the containers can be stacked on top of one another in the multi-container frame, which is a particularly efficient way to store the containers. In this case, causing the first and second storage containers to be stored within the same multi-container frame may comprise causing the first and second containers to be stacked on top of one another within the multi-container frame. Where the containers are stacked in this way, the multi-container frame may be referred to as a "stacker frame".

It will be appreciated that events occurring in the automated storage and retrieval system may have an associated priority. Certain events, such as extraction of a container associated with a current live picking order, may take precedent over rearrangement of containers that are not currently being picked from. Accordingly, it is advantageous to perform such rearranging during a time when there is reduced demand and when there are fewer high-priority tasks to be carried out in the automated storage and retrieval system. In this manner, the disclosed method may comprise identifying a period of reduced activity at the automated storage and retrieval system. The step of causing the first and second storage containers to be stored within the same multi-container frame may be scheduled to occur during the identified period of reduced activity. In this manner, rearranging of the containers can be performed when there is less demand on the container-handling vehicles of the system. Identifying a period of reduced activity at the automated storage and retrieval system may involve, for example, determining that the number of live picking orders to be fulfilled has dropped below a threshold or is expected to drop below a threshold at a specific future time. Methods of rearranging containers as set out in the present disclosure can be scheduled to occur during these times of lower demand.

In some implementations, the method may further comprise: receiving data associated with a picking event request, said data indicative of a request for the first storage container; causing the first storage container to be removed from the multi-container frame such that one or more items can be picked from the first storage container; and while the first storage container is absent from the multi-container frame, reserving the empty position within the multi-container frame for the first storage container. Upon completion of the picking event request, the method may comprise causing the first storage container to be returned to the multi-container frame. In this way, the strategic organisation of the first and second containers in the multi-container frame is maintained.

The term "reserving" should be interpreted broadly. In some implementations, "reserving" the location in the multi-container frame may comprise preventing entirely any other container being placed in that location. However, in some implementations, a more nuanced approach may be desired in which the vacant space with another container is disincentivised, but not totally disallowed. Disincentivising placement of a container in the vacant space can be achieved by placing a cost on filling the vacant space. The concept of a "cost" in the context of an automated storage and retrieval system will be known to a skilled reader, and is frequently used by controllers to determine where to store containers. In particular, container-handling vehicles may be incentivised to minimise the cost of storing a container in a new location within the grid. The controller can determine the cost associated with storing locations in certain positions, so as to incentivise container-handling vehicles to store containers at advantageous locations, such as locations near the top of the grid. By implementing a cost-based mechanism in the reserving of the vacant position in the multi-container frame, the position can be reserved while leaving flexibility for another container to be stored in the vacant position in an emergency, for example if no other suitable locations are free.

In some implementations, the method may further comprise: receiving data associated with a picking event request, said data indicative of a request that requires the first and second storage containers to be removed from the multi-container frame; causing the first and second storage containers to be removed from the multi-container frame; and subsequently, causing the first and second storage containers to be: returned to the multi-container frame; or stored in a new, same multi-container frame. In this way, the system ensures that the first and second containers (which have been identified as being correlated) are kept together. This preserves the strategic organisation achieved by placing the first and second containers together in the same multi-container frame.

According to another aspect of the present disclosure, a computer-readable medium is disclosed. The computer-readable medium comprises instructions which, when executed by a computer, cause the computer to carry out any of the methods described herein.

According to another aspect of the present disclosure, a computer program is disclosed. The computer program comprises instructions which, when the program is executed by a computer, cause the computer to carry out any of the methods described herein.

According to another aspect of the present disclosure, a controller is disclosed. The controller comprises a processor and a memory, the controller configured to carry out any of the methods described herein.

According to another aspect of the present disclosure, an automated storage and retrieval system is disclosed. The system comprises: a first storage container; a second storage container; a multi-container frame; a container-handling vehicle configured to move the first and second storage containers; and a controller configured to carry out any of the methods described herein.

The systems and methods introduced in the above overview will now be described in further detail. Various non-limiting example implementations will be described to aid understanding.

### Automated storage and retrieval system overview

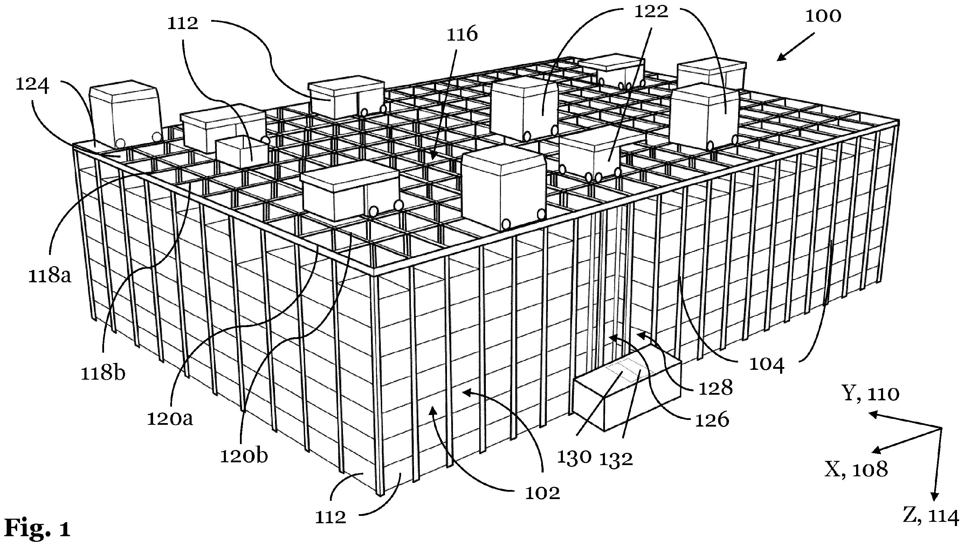

Referring to the example embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers 112, also known as bins, are stacked on top of each other, preferably in a self-supporting manner, in the Z direction 114 in the columns 102. In this manner, the grid 100 forms a storage volume of storage cells for respective storage containers 112 extending in the X, Y and Z directions 108, 110, 114, with each container 112 typically taking up one cell of the grid 100.

A rail system or network 116 is formed on top of the grid 100 and comprises pairs of vehicle rails or tracks 118a, 118b and 120a, 120b, respectively extending in the X and Y directions 108, 110. Robotic container-handling vehicles, also known as robots, 122, which can be of a range of size, shape and function, are provided and configured to run on the rails 118, 120 and to transport storage containers 112 in both the X and Y directions 108, 110. The container-handling vehicles 122 are additionally configured to lift and lower storage containers 112 from/into the columns 102 in the Z direction 114, the storage containers 112 optionally being guided by the vertical frame members 104. The container-handling vehicles 122 access the storage containers 112 via access openings 124 above the columns 102 and formed between the rails 118, 120.

Some columns 102 may be used for alternative purposes than storage container storage. For example, port columns 126, 128 comprise port or access columns allowing transfer of a storage container 112 in and/or out of the grid 100. Port columns 126, 128 provide a vertical channel for lifting of a storage container 112 from, or lowering of a storage container 112 to, a port or ports 130, 132. The ports 130, 132 are shown in Fig. 1 at the lowest level of the grid, however ports can be located at any vertical position along the column. The respective port columns 126, 128 can be assigned for removing ("drop-off') and/or returning or delivering ("pick-up") storage containers 112 from/to the grid 100. The ports 130, 132 are therefore configured to allow storage containers 112 to be removed and reintroduced (horizontally) into the associated port column. As such, a port 130, 132 can comprise a conveyor (not shown in Fig. 1) onto which a storage container 112 may be lowered and transported horizontally out of the port column. The port columns 126, 128 include an opening or access point through which storage containers 112 can enter and leave the column.

Storage containers 112 can be transported along the top of the grid 100 to and/or from a port column 126, 128 by container-handling vehicles 122, and from a port 130, 132 to a location outside the grid 100, which may be an access station (not shown) for processing of the storage container 112 or its contents, such as a picking station for adding content to, or removing content from, the storage container 112. In alternative examples (not shown), the storage container 112 may be transported to a port of another grid on the same or another level, or to an external facility. Transport of storage containers 112 to and from ports 130, 132 may be by any appropriate means (not shown) including conveyors, transport vehicles, lifts or container-handling vehicles.

As already noted above, the process of one or more container-handling vehicles 122 extracting one or more containers 112 from the grid 100 and delivering it/them to a suitable grid-exit location (such as a port 130, 132) is referred to as a "picking event" herein. Picking events take place in response to "picking event requests", which are typically triggered by an incoming purchase or shipment order and indicate that one or more containers are needed to fulfil the order. The allocation of tasks associated with a picking event can be performed by a computerised controller of the automated storage and retrieval system in any suitable way, as will be known to a skilled reader. In particular, the controller typically analyses an incoming picking event request, and instructs one or more container-handling vehicles 122 to extract one or more containers 112 from the grid 100 in response.

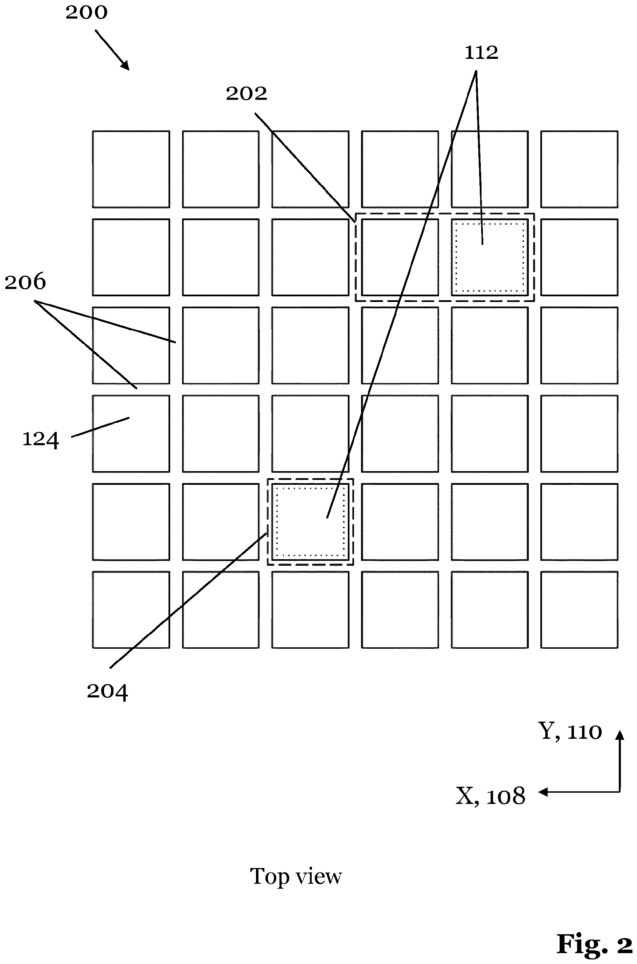

Referring now to the embodiment shown in Fig. 2, the X-Y configuration 200 of the rail system 116 can be seen in more detail, together with container-handling vehicles 202, 204 of different types. Container-handling vehicles 202, 204 correspond to the container handling vehicles 122 of Fig. 1. The rail system includes rails 206 defining between them vertical column access openings 124 for access to storage containers 112. The rails 206 can be any appropriate type for permitting travel of the container-handling vehicles 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

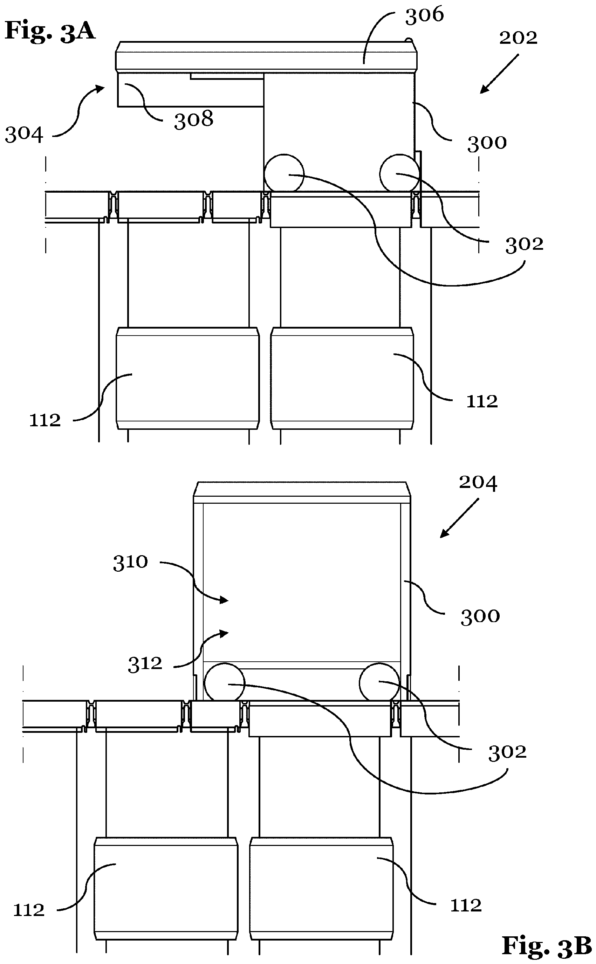

A first, 'cantilever' type of container-handling vehicle 202 is shown in more detail in Fig. 3A and includes a body 300, a set of wheels 302 and a lifting device 304. The body 300 contains operational equipment (not shown) for the container-handling vehicle 202 including drive, power and control systems. The wheels 302 permit movement of the container-handling vehicle 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a storage container 112; for example, by gripping a part of the storage container 112, or by passively or actively engaging a suitably configured part of the storage container 112.

A second, 'internal cavity' type of container-handling vehicle 204 is shown in more detail in Fig. 3B and includes, as an alternative to the cantilevered lifting system, an internal cavity 310 within the body 300 and in which the lifting device 312 including a gripping device 322 (not visible in this Figure) is located. In this case, the body 300 includes the container-handling vehicle's operational equipment and a storage space for one or more storage containers 112, for use, for example, while transporting the storage container 112.

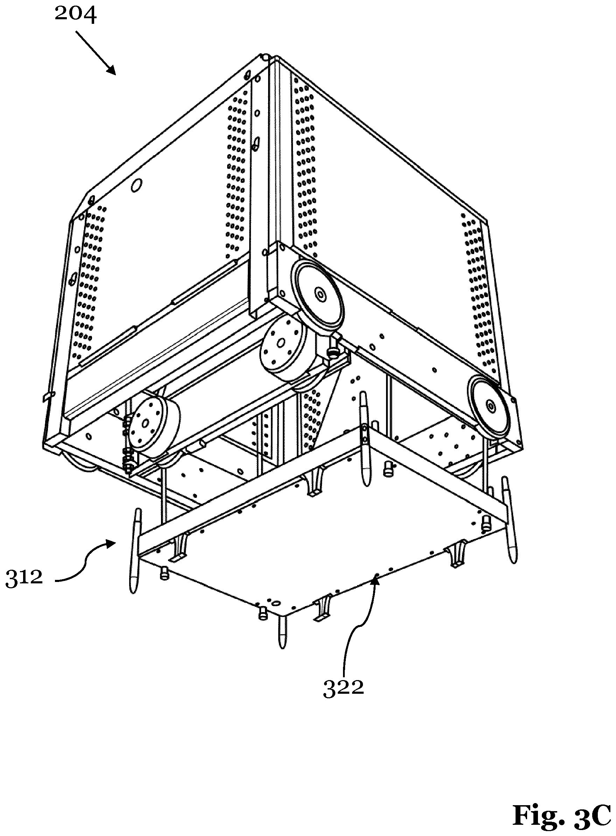

Fig. 3C shows the container-handling vehicle 204 of Fig. 3B from a bottom perspective view. In this view, lifting device 312 including gripping device 322 is visible and is shown in a part extended configuration. It can be seen that the gripping device 322 contains various protrusions configured to couple to a storage container 112 to enable the container-handling vehicle 204 to lift or lower the storage container 112. Although the perspective view shown in Fig. 3C is of the container-handling vehicle 204 of Fig. 3B, it will be appreciated that a similar lifting device 312 and gripping device 322 maybe applied to the container-handling vehicle 202 of Fig. 3A.

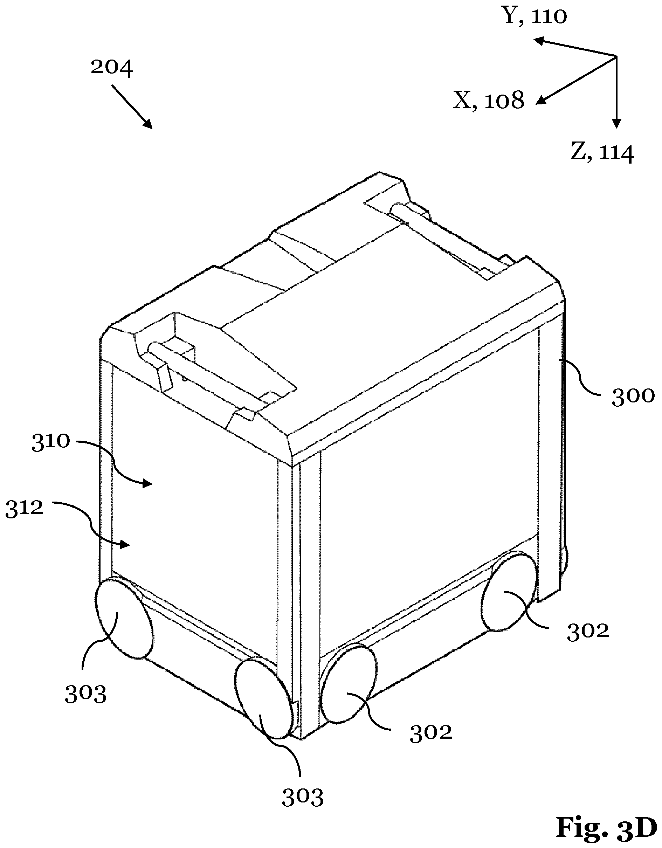

Fig. 3D shows a perspective side view of the container-handling vehicle of Figs. 3B and 3C in which the first set of wheels 302 from Fig. 3B are visible. The additional set of wheels referenced above but not shown in Fig. 3B are shown as wheels 303 in Fig. 3D. The additional set of wheels 303 is arranged perpendicular to the first set of wheels 302, to allow rolling of the container-handling vehicle 204 in the X and Y directions on the first and second set of wheels 302, 303 respectively. The first and second set of wheels 302, 303 shown in Fig. 3D may be configured to be independently lowered into engagement with the rails (and conversely raised out of engagement with the rails) to allow the container-handling vehicle 202 to move in the X and Y direction across the arrangement of rails shown in Fig. 2. Although the perspective view shown in Fig. 3D is of the container-handling vehicle 204 of Fig. 3B, it will be appreciated that a similar perpendicular wheel arrangement may be applied to the container-handling vehicle 202 of Fig. 3A.

### Control and monitoring system

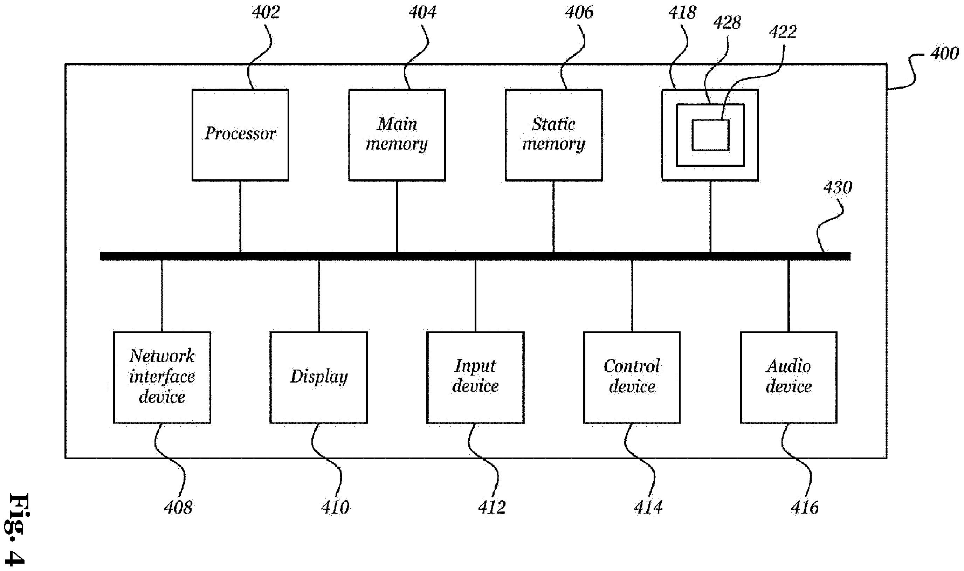

Control and monitoring of the automated storage and retrieval system is performed by a control system shown in Fig. 4 in communication with the container-handling vehicles and/or other controllable system components. This control and monitoring may include monitoring and modifying storage container position, controlling storage container delivery, retrieval and transport, and controlling container-handling vehicle routing and collision avoidance. Control can be performed locally or remotely and may be implemented by a processing system, for example in the form of a computing device. Accordingly, all of the methods described herein may be computer-implemented and may be performed by a controller or control system of the automated storage and retrieval system. In this way, the disclosed methods may form all or part of a computer-implemented method, or a system configured to perform the methods described herein. The disclosed methods may be performed by a single controller or control system or by a plurality of controllers or control systems working together. One of the control systems may comprise a Warehouse Management System, which may be configured to monitor other aspects or data associated with the storage and retrieval system, such as purchase or shipping order data, stock inventory data etc.

With reference to Fig. 4, a processing system 400 suitable for carrying out the methods described herein will now be described. The processing system 400 is an example implementation of a controller of the automated storage and retrieval system that maybe used to implement the methods disclosed herein.

Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device maybe a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each storage container 112 is given a unique identifier, which may be marked on the storage container 112 using a computer-readable identifier (e.g., a barcode, quick-response code or radio-frequency identification tag) to ease identification of the storage container 112. A database of the processing system 400 stores, in association with the unique identifier, the position and, optionally, content of each storage container 112. When a storage container 112 is moved (e.g., when it is picked and retrieved from the grid 100), the database is updated to record its change in position.

When it is desired to retrieve a storage container 112 from the grid 100, for example as part of a picking event, a container-handling vehicle 202, 204 under control of the processing system 400 is routed via the rail system 116 to the vertical column 102 including the storage cell where, according to the database, the storage container 112 is positioned. The lifting device 304, 312 of the container-handling vehicle 202, 204 is positioned (according to container-handling vehicle type) over the corresponding access opening 124, either adjacent or below the container-handling vehicle 202, 204. The container-handling vehicle 202, 204 lowers the gripping device 308, 312 which engages, grips and lifts the storage container 112 to the container-handling vehicle 202, 204. The container-handling vehicle 202, 204 then transports the storage container 112, for example, to the drop-off port column 126, 128 for delivery to the port 130, 132 and subsequent processing external to the grid 100. In the event that the target or designated storage container 112 is below other storage containers in the stack then the container-handling vehicle 202, 204 or multiple container-handling vehicles, which may be dedicated to the task, are controlled in a "digging" operation to sequentially lift and reposition, temporarily or permanently, storage containers above the target storage container 112 in order for it to be retrieved. It will be appreciated that other operations in relation to the storage container 112 can be carried out in a similar manner. For example, a storage container 112 can be delivered for storage in the grid 100 at the port 130, 132 of the pick-up port column 126, 128, gripped and lifted by a container-handling vehicle 202, 204 and delivered to the desired storage cell, storage containers above the desired position being repositioned if necessary as discussed above.

With specific relevance to the methods of the present disclosure, the above-described mechanisms can also be used to arrange a plurality of storage containers 112 within a single multi-container frame, as will now be described in more detail.

### Multi-container frames

The present disclosure relates to multi-container frames, in other words frames or containers that are themselves configured to hold a plurality of other, smaller containers. These multi-container frames can be stored and handled in the automated storage and retrieval system of the present disclosure in the same manner as the storage containers 112 referenced above in relation to Figures 1-4. Accordingly, multi-container frames represent an example implementation of the storage containers 112 described above and shown in Figs. 1, 2, 3A and 3B. A multi-container frame may be configured to accommodate between two and six containers in a typical implementation, although larger multi-container frames are possible.

In the primary implementation of the present disclosure, the multi-container frames are configured to accommodate a plurality of bins or containers within them, stacked one on top of another. In that case, the multi-container frame may be referred to as a "stacker frame" because the containers held within it are stacked on top of one another. For simplicity, the remainder of this description will focus on this form of multi-container frame. However, it will be appreciated that in other implementations (not shown in the accompanying Figures), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present invention relates to any form of multi-container frame configured to accommodate a plurality of containers within it.

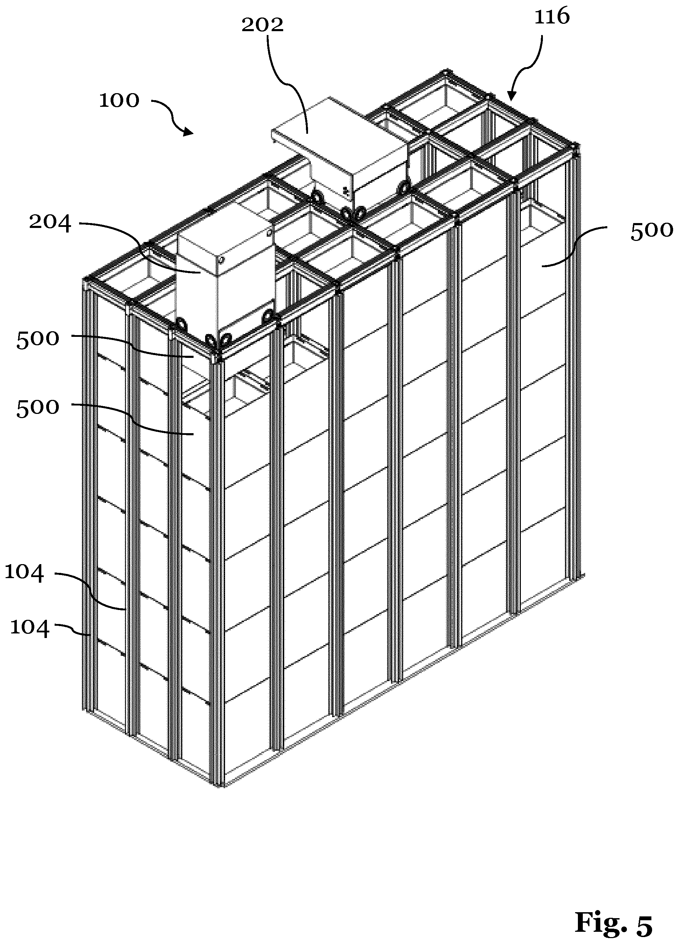

Turning now to Fig. 5, this figure shows a subsection of the automated storage and retrieval system shown in Fig. 1. A portion of the grid 100 can be seen together with robotic container-handling vehicles 202, 204 operating on the rail system 116. In the system shown in Fig. 5, the storage containers 112 stored in the visible portion of the grid 100 are multi-container frames 500. As noted above, in this implementation the multi-container frames 500 are all stacker frames 500, within which the smaller containers are stored one on top of the other. Accordingly, for simplicity, the phrase "stacker frame" will be used hereafter. However, the following description applies to any form of multi-container frame.

As can be seen from Fig. 5, one of the stacker frames 500 is in the process of being lifted by container-handling vehicle 204. This lifting is performed in a similar manner as discussed above in relation to the containers 112 of Fig. 1 and the lifting mechanisms discussed in relation to Figs. 3B and 3C. Further details of how stacker frames 500 can be lifted will be described below.

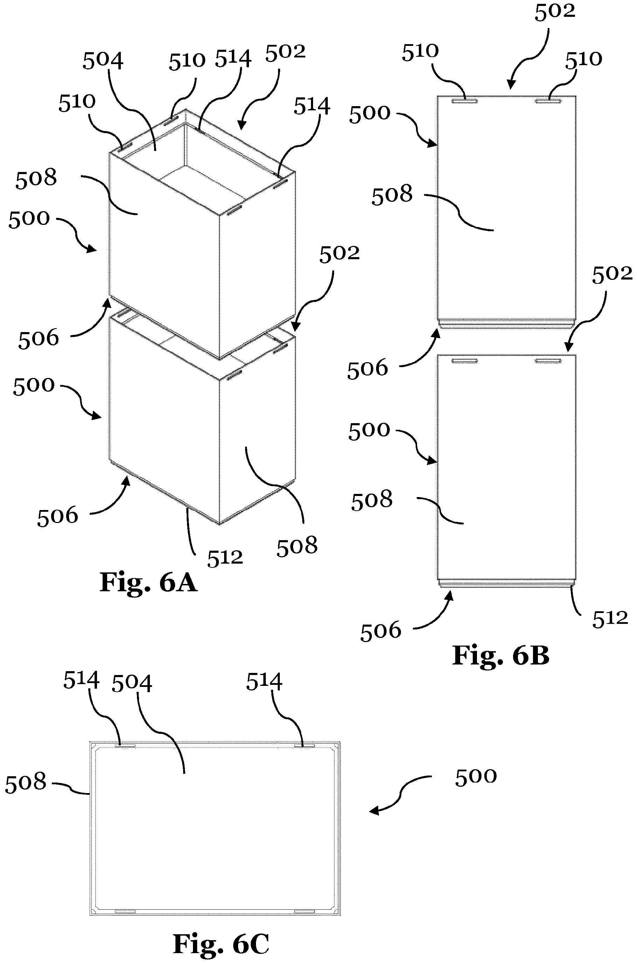

Example stacker frames 500 are shown in more detail in Figs. 6A to 6C. Each of the stacker frames 500 has an open top end 502 for allowing a smaller storage container 504 to pass into the stacker frame 500. As already noted, each stacker frame 500 is configured to accommodate a plurality of such smaller storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Fig. 1, or may be specially designed containers configured for storing within a stacker frame 500.

Each stacker frame 500 comprises a bottom end 506, for supporting a lowermost storage container 504. In the present example, the stacker frames 500 are themselves open-topped containers and comprise side walls 508 extending between the bottom end 506 and the top end 502 of each stacker frame 500. In other examples, stacker frame 500 may simply comprise a framework defining the frame within which the smaller containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses 510 enable the stacker frames 500 to be placed into and lifted out of a storage column of the grid 100, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Fig. 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

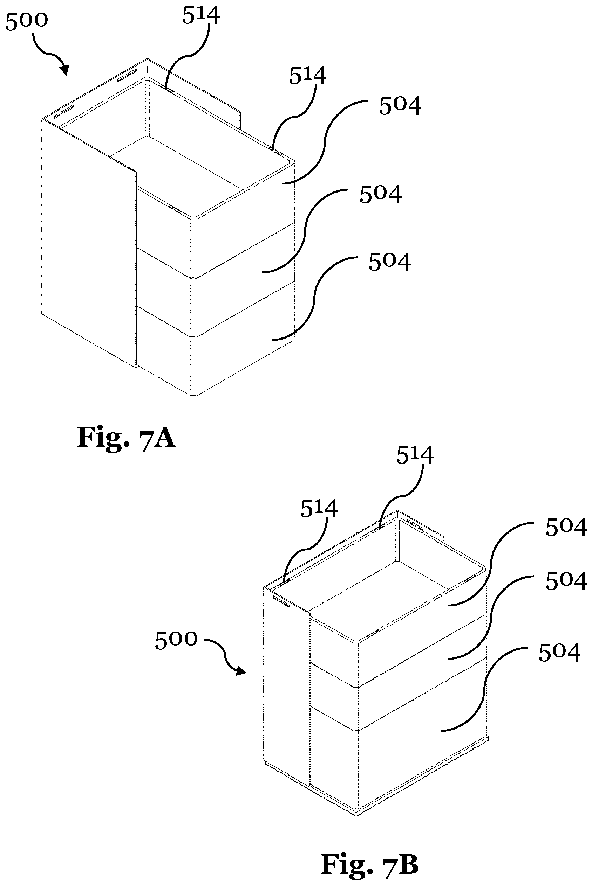

Figs. 7A and 7B show stacker frames 500 with a cut-away section to better illustrate the stacking of the storage containers 504 inside the stacker frame 500. The stacker frame 500 shown in Fig. 7A contains three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary storage containers 112 as described in relation to Figure 1. A variety of modifications maybe made to the container-handling vehicles 202, 204 to enable them to better interact with stacker frames 500 and the containers 504 stored within stacker frames. Some example implementations detailing such modifications will now be described, however it will be appreciated that other suitable mechanisms maybe provided additionally or alternatively.

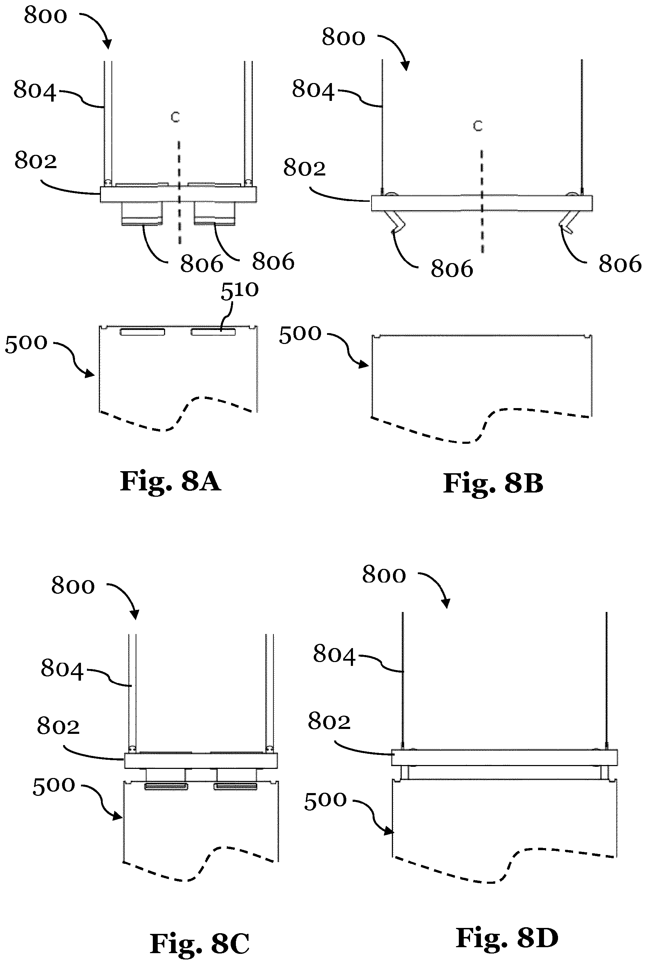

Figs. 8A-D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. The lifting device 800 is configured to engage with a stacker frame 500 such that the stacker frame 500 may be lifted or lowered into or out of a column 102 of the grid 100.

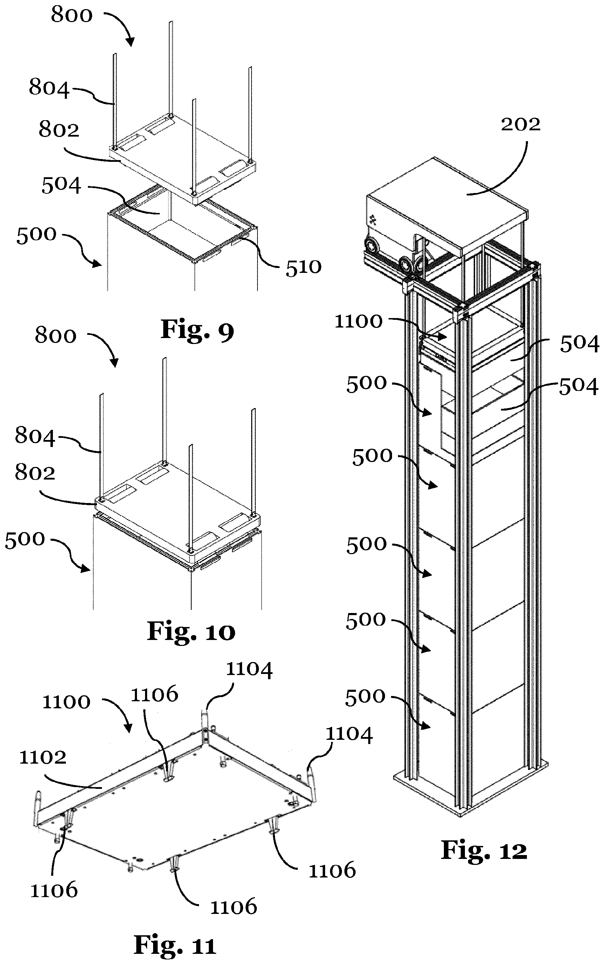

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches are an example implementation of a gripping device, such as gripping device 308 or 322 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 in this example has an outer periphery configured to fit within an inner periphery of the side walls of the stacker frame 500. The inner periphery of the side walls of the stacker frame 500 maybe configured to guide the lifting frame 1102 when within the stacker frame 500.

Example lifting mechanisms to enable a container-handling vehicle 202, 204 to lift a stacker frame 500 or container 504 from a stacker frame have been described with reference to Figures 8A-12. However, it will be appreciated that these mechanisms are merely exemplary. Other mechanisms can be used, and both stacker frames 500 and containers 504 may be modified appropriately to accommodate an alternative form of lifting mechanism.

### Strategic organisation of correlated containers within a stacker frame

With the above description of stacker frames 500 in mind, the methods of the present disclosure relate to strategically arranging and grouping containers 504 within stacker frames 500 (or within any other form of multi-container frame) to improve efficiency in carrying out future picking events and ensuring optimised utilisation of container-handling vehicles within the storage and retrieval system. Each container-handling vehicle can only perform one job at a time, and so increasing efficiency and reducing wasted downtime while container-handling vehicles traverse the grid travelling to or digging for target containers provides significant improvements in the overall operating efficiency of the storage and retrieval system.

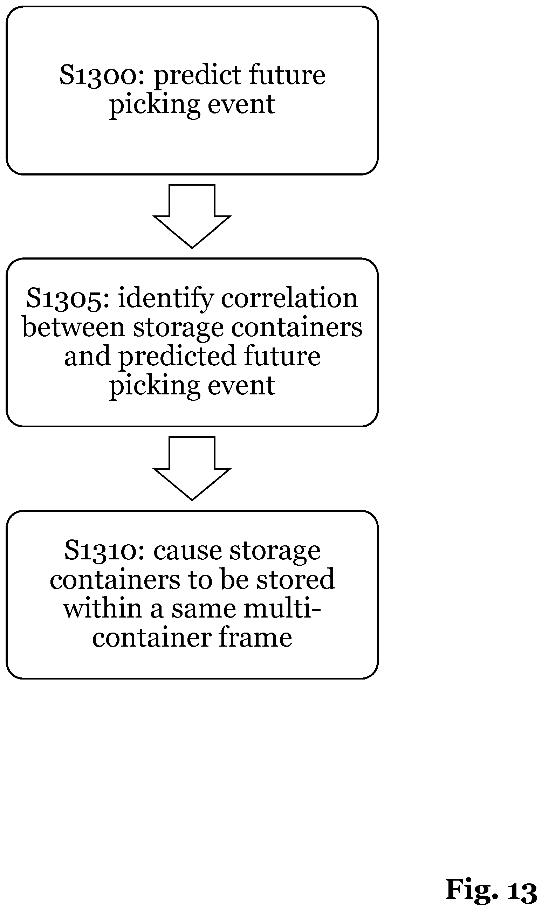

A method of grouping correlated containers 504 in a stacker frame 500 (or any other form of multi-container frame) is shown in Fig. 13. The method of Fig. 13 may be performed by a controller of the automated storage and retrieval system, for example processing system 400 described above with reference to Fig. 4. The controller may in some implementations work alongside a Warehouse Management System configured to control and oversee other aspects of the storage and retrieval system, such as stock monitoring, order monitoring, climate control etc. The method of Fig. 13 may be performed by transmitting instructions to or receiving instructions from such a Warehouse Management System.

Step 1300 comprises predicting a future picking event associated with the automated storage and retrieval system. That is, the system predicts a future picking event that is likely to occur. In an illustrative example, the prediction may be that containers containing beer and pizza are likely to be picked together. This maybe a general prediction or relate to specific containers that are known to contain pizza and beer. Alternatively, the prediction may be agnostic as to the actual goods involved and simply predict that two containers are likely to be picked together in future.

As noted above, these predictions can be made on the basis of a variety of data. In some instances, the future picking event is predicted based on historical picking event data indicative of which containers have been picked from during one or more previous picking events. The future picking event may additionally or alternatively be predicted based on a user input specifying one or more items associated with the predicted future picking event. For example a user may indicate that sales of certain items are expected to increase, in response to which the system may predict a picking event associated with containers 504 containing the items in question. The system may additionally or alternatively recognise (based on analysis of past picking event data and/or user inputs) that certain containers 504 are picked more frequently at certain dates or times or when the weather exhibits certain behaviour (e.g. hot or cold days). Accordingly, the predicted future picking event can be predicted based on date, time or current or predicted meteorological data.

The data used to predict the future picking event can be obtained from the storage and retrieval system in question as well as from other storage and retrieval systems at other sites. In other words, the future picking event can be predicted based on historical picking event data associated with one or more additional automated storage and retrieval systems.

Irrespective of how the predicted future picking event is predicted, the method continues at step 1305 by identifying that a first storage container 504 and a second storage container 504 of the automated storage and retrieval system are correlated with the predicted future picking event. In particular, it is determined that the first and second storage containers 504 are likely to be picked during the predicted future picking event. As noted above, this maybe because the first and second storage containers 504 are known to contain first and second items respectively that are predicted to be picked during the predicted future picking event. Alternatively, the system may treat the containers 504 as "black boxes" and simply recognise that the first and second containers 504 have been picked from as part of a same picking event in the past and so are likely to be picked from during a same picking event in the future. In either case, the system identifies a correlation between the first and second containers 504 and the future picking event predicted at step 1300. A threshold may be set, determining when two containers are considered as being correlated with a future predicted picking event. For example, containers that have been picked together in at least 20 previous picking events in a given timeframe may be considered as being correlated. It will be appreciated that step 1305 may occur simultaneously with step 1300.

Responsive to making the identification of step 1305, at step 1310 the method proceeds by causing the first and second storage containers 504 to be stored within a stacker frame 500 (or other form of multi-container frame). In particular, this may be achieved by causing a container-handling vehicle 202, 204 to place the first and second storage containers 504 within the same stacker frame 500 as described in detail above. As a result, the first and second storage containers 504 are now stored together at the same location within the grid 100 of the storage and retrieval system. This means that when the predicted future picking event comes to pass, the containers 504 can be easily retrieved in a single step by the same container-handling vehicle 202, 204. There is no need to fetch the first container 504 from one part of the grid 100 and then fetch the second container 504 from another part of the grid 100. The efficiency with which the picking event can be fulfilled is therefore significantly enhanced. It will be appreciated that this method can be carried out for many pairs of storage containers 504 throughout the grid 100, and that the efficiency gains arising from implementation of the method thereby multiply each time the method is carried out for a new set of containers 504. While the above example refers to a first and second container 504, it will be appreciated that correlations between any number of containers 504 and a predicted future picking event can be identified and any number of containers 504 can be stored together in a stacker frame 500 as a result.

To further explain the above described method, the following illustrative example is provided. In this example, historical picking data for the storage and retrieval system is available to a controller of the system. The controller analyses the historical picking data and identifies a pattern that containers #0001 and #0002 have been picked in the same picking event twenty times in the past day. Based on this data, the controller predicts (step 1300) a future picking event during which containers #0001 and #0002 are again both picked. Clearly, containers #0001 and #0002 are correlated with this future picking event and this is identified by the controller (step 1305). It will be apparent that in this case step 1305 may occur simultaneously with, or follow directly from, step 1300. As a result of this identification, the controller instructs (step 1310) a container-handling vehicle 202, 204 to store containers #0001 and #0002 in a same stacker frame 500 in the grid 100. Note that in this example the controller need have no knowledge about what items are actually stored in containers #0001 and #0002; the strategic organisation is achieved simply by identifying that these containers are frequently picked together.

In an alternative illustrative example, the controller analyses the historical picking data and identifies a pattern that containers containing a first item (e.g. beer cans) and containers containing a second item (e.g. pizzas) are commonly picked from during the same picking event. Based on this data, the controller predicts (step 1300) a future picking event during which containers containing beer cans and pizzas are picked. In this illustrative example, it is known to the controller (or determined thereby) that container #0001 contains pizzas and container #0002 contains beer cans. Accordingly, the controller identifies (step 1305) that containers #0001 and #0002 are correlated with the predicted future picking event. As a result of this identification, the controller instructs (step 1310) a container-handling vehicle to store containers #0001 and #0002 in a same stacker frame 500 in the grid 100.

In some implementations, the controller may utilise machine learning to implement the disclosed methods. In particular, steps 1300 and/or 1305 may be implemented using a machine learning model. In this manner, a machine learning model maybe trained to predict future picking events based on previous picking events that have occurred at the storage and retrieval system and/or at one or more other storage and retrieval systems. The machine learning model may also be trained to identify correlations or associations between containers of the storage and retrieval system. In particular, the machine learning model maybe trained to identify which containers are frequently picked together, and whether any additional patterns or trends emerge such as relating to the time or day of the week at which certain containers tend to be picked together. Preferably, this training may be performed using unsupervised learning during which historical picking data for one or more automated storage and retrieval systems is provided as the input training data to the model. From this data, the machine learning model learns to detect patterns or trends in the data. The unsupervised training can in some cases be facilitated with some supervised learning steps, for example by adjusting model parameters of the machine learning model to reduce an error between the model outputs and some overarching goal or target data, as is known in the art. This process may be repeated until a sufficiently well trained model is obtained, as measured by a stopping criterion such as a convergence criterion, a criterion on the error or a pre-set number of epochs. Numerous programming languages and libraries are available to implement this process using a large variety of machine learning models, such as a deep neural network. It will be appreciated by a skilled reader that a suitable model based on considerations such as available data and compute and the kind of data to be processed based on routine considerations can be chosen. Once trained, the machine learning model can be used to implement the above described methods, with the ultimate aim of predicting future picking events and identifying which containers 504 of the storage and retrieval system are correlated with the predicted picking events.

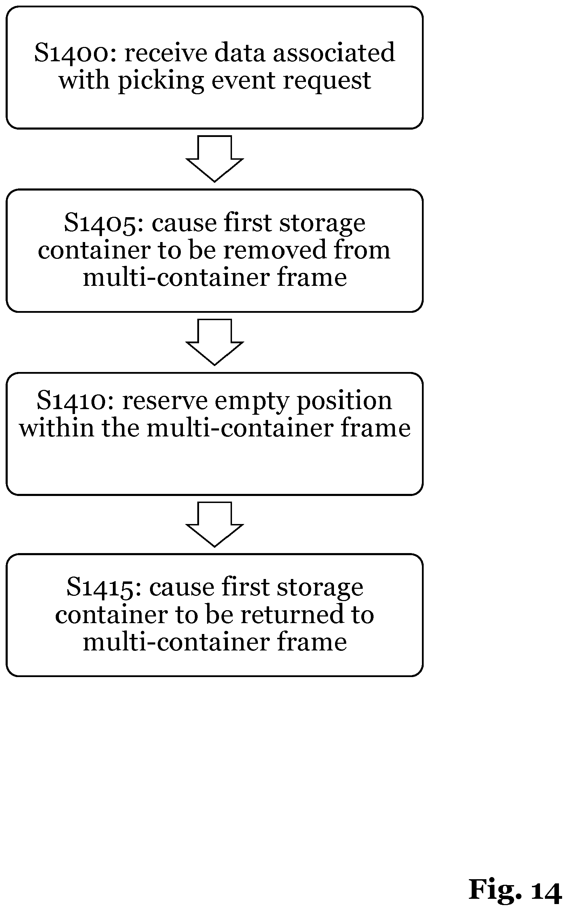

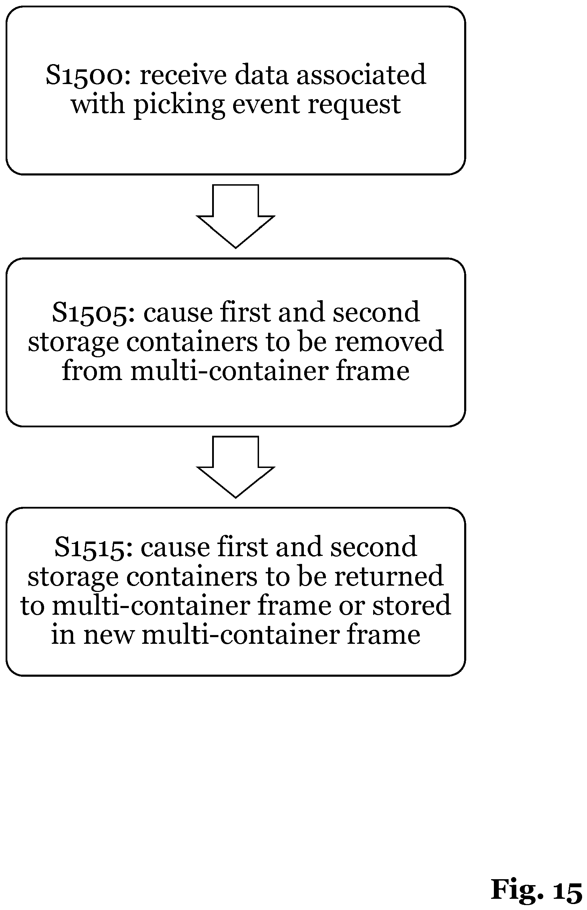

Turning now to Figs. 14 and 15, the present inventors have identified that an issue may occur after the first and second containers 504 have been placed in the same stacker frame 500, in other words after the steps of Fig. 13 have been completed. In particular, a subsequent picking event may happen in which only one of the first and second containers 504 are picked. This necessitates removing one of the containers 504 from the stacker frame 500, thereby undoing the strategic organisation previously achieved. Alternatively, the first and second containers 504 maybe stored within a stacker frame with a third storage container 504. A picking event involving the third storage container 504 may require the first and second containers 504 to be removed from the stacker frame so that the third container 504 can be accessed. Again, this scenario would undo the strategic placement of the first and second containers 504 within the stacker frame 500 that had previously been achieved.

To address such potential scenarios, the present inventors have devised certain routines which the controller of the storage and retrieval system can perform to mitigate these issues. Examples of such routines are described in Figs. 14 and 15. The methods of Figs. 14 and 15 can be considered as an extension of the method of Fig. 13 and can be performed by the same controller, such as processing system 400, which carried out the method of Fig. 13.

Turning first to Fig. 14, a method is described which can be implemented in the first above-described scenario where one of the first and second containers 504 is removed from the stacker frame 500. The method begins at step 1400 by receiving data associated with a picking event request, said data indicative of a request for the first storage container 504. For example, an order request may have been received by the storage and retrieval system that requires an item that is known to be stored in the first storage container 504. As a result, the controller receives (or generates, depending on how the system is configured) a picking event request in relation to the first storage container 504. As a result, at step 1405 the controller causes the first storage container 504 to be removed from the stacker frame 500 such that one or more items can be picked from the first storage container 504 to fulfil the received order request. Removing the first storage container 504 from the stacker frame 500 negates the strategic placement of the first and second containers 504 within the same stacker frame 500 that had previously been achieved by carrying out the method of Fig. 13.

To mitigate this, the controller in this example implements step 1410 and reserves the empty position within the stacker frame 500 vacated by the first storage container 504 while the first storage container 504 is absent from the stacker frame 500. In some implementations, reserving the empty position comprises assigning an associated cost to the empty position which disincentivises container-handling vehicles 202, 204 from filling the empty position with a different storage container 504. The concept of assigning a "cost" to each placement position and/or task performed by a container-handling vehicle 202, 204 is a known way to determine the sequence of tasks and task prioritisation performed within a storage and retrieval system, as will be known by a skilled reader. Container-handling vehicles 202, 204 in this implementation attempt to minimise the "cost" associated with the tasks they perform. By placing a high cost on placing a container in the vacated position in the stacker frame 500, it is made less likely that the vacated position is filled by a different container 504.

Assuming the vacated spot within stacker frame 500 is still empty upon completion of the picking event request, the method concludes at step 1415 by causing the first storage container 504 to be returned to vacant position in the stacker frame 500. As a result, the picking event request can be fulfilled without destroying the strategical organisation of the first and second storage containers 504 within the same stacker frame 500.

A similar method is described with respect to Fig. 15, dealing with the scenario where both the first and second storage containers 504 are removed from the stacker frame 500. Accordingly, the method of Fig. 15 begins at step 1500 by receiving data associated with a picking event request, said data indicative of a request that requires the first and second storage containers 504 to be removed from the stacker frame 500. This may occur, for example, if both containers 504 are used in a picking event and/or when both containers 504 are removed to provide access to another storage container 504 within the stacker frame 500 stored beneath the first and second storage containers 504.

As a result, at step 1505 the method proceeds by causing the first and second storage containers 504 to be removed from the stacker frame 500 such that the picking event request can be fulfilled. This again negates the strategic placement of the first and second containers 504 within the same stacker frame 500 that has been achieved by carrying out the method of Fig. 13.

To mitigate this, the method proceeds at step 1515 by ensuring that the first and second storage containers 504 are again stored together after completion of the picking event request. In one implementation, this can be achieved by causing the first and second storage containers 504 to be returned to the stacker frame 500 from which they were removed. Alternatively, the first and second storage containers 504 can be stored in a new, same stacker frame 500 within the grid. In this manner, the strategical organisation of the first and second storage containers 504 within a same stacker frame 500 is maintained.

The present inventors have identified that tasks performed within the storage and retrieval system need to be prioritised. Tasks related to fulfilling picking event requests, critical repairs and/or recharging of container-handling vehicles 202, 204 may need to take priority over tasks associated with strategic organisation of containers 504. As a result, it may be desirable to schedule performance of the methods of the present disclosure to occur at times when there is less demand on the container-handling vehicles 202, 204 to perform other tasks. The methods of the present disclosure, in particular those described with reference to Figs. 13-15 above, can advantageously be scheduled during such periods of low demand. The controller of the system may identify or predict a period of reduced activity at the automated storage and retrieval system. This may be identified in real time based on, for example, the number of live tasks being performed by container-handling vehicles 202, 204, the number of unfulfilled picking event requests, the number of unfulfilled shipping orders, or some other similar indicator of demand. The period of reduced activity may also be predicted based on historical data indicating periods of low demand, such as during the night or at weekends. Once a period of low demand has been identified or predicted, the controller may schedule the performance of the methods of Figs. 13, 14 and/or 15 to occur during this period. This ensures that the strategical organisation of containers 504 does not interfere with picking event or order fulfilment, or other more critical tasks.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method performed by a controller of an automated storage and retrieval system, the method comprising:
predicting a future picking event associated with the automated storage and retrieval system;
identifying that a first storage container and a second storage container of the automated storage and retrieval system are correlated with the predicted future picking event; and
responsive to identifying the correlation, causing the first and second storage containers to be stored within a same multi-container frame of the automated storage and retrieval system.

2. The computer-implemented method of claim 1, wherein the future picking event is predicted based on historical picking event data indicative of which containers have been picked from during one or more previous picking events.

3. The computer-implemented method of claim 1 or 2, wherein identifying that the first and second storage containers are correlated with the predicted future picking event comprises identifying that the first and second storage containers have previously been picked from as part of a same picking event.

4. The computer-implemented method of claim 3, wherein identifying that the first and second storage containers are correlated with the predicted future picking event comprises identifying that the first and second storage containers have previously been picked from as part of a same picking event at least a threshold number of times, optionally wherein the threshold number of times is at least twenty.

5. The computer-implemented method of any of claims 2-4, wherein the step of predicting the future picking event is performed by a machine learning model configured to predict future picking events based on historical picking event data.

6. The computer-implemented method of any preceding claim, wherein the predicted future picking event is predicted based on one or more of:
a user input specifying one or more items associated with the predicted future picking event;
a date associated with the predicted future picking event;
a time associated with the predicted future picking event; and/or
meteorological data associated with the predicted future picking event.

7. The computer-implemented method of any preceding claim, wherein identifying that the first and second storage containers are correlated with the predicted future picking event comprises identifying that:
i) a first product associated with the predicted future picking event is stored in the first storage container; and
ii) a second product associated with the predicted future picking event is stored in the second storage container.

8. The computer-implemented method of any preceding claim, wherein the future picking event is predicted based on historical picking event data associated with one or more additional automated storage and retrieval systems.

9. The computer-implemented method of any preceding claim, wherein causing the first and second storage containers to be stored within the same multi-container frame comprises transmitting instructions to cause a container-handling vehicle to place the first and second storage containers within the multi-container frame, optionally wherein causing the first and second storage containers to be stored within the same multi-container frame comprises causing the first and second storage containers to be stacked on top of one another within the multi-container frame.

10. The computer-implemented method of any preceding claim, further comprising:
identifying a period of reduced activity at the automated storage and retrieval system; and
scheduling the step of causing the first and second storage containers to be stored within the same multi-container frame to occur during the period of reduced activity.

11. The computer-implemented method of any preceding claim, further comprising:
receiving data associated with a picking event request, said data indicative of a request for the first storage container;
causing the first storage container to be removed from the multi-container frame such that one or more items can be picked from the first storage container; and
while the first storage container is absent from the multi-container frame, reserving the empty position within the multi-container frame for the first storage container,
the method optionally further comprising:
upon completion of the picking event request, causing the first storage container to be returned to the multi-container frame.

12. The computer-implemented method of any preceding claim, further comprising:
receiving data associated with a picking event request, said data indicative of a request that requires the first and second storage containers to be removed from the multi-container frame;
causing the first and second storage containers to be removed from the multi-container frame; and
subsequently, causing the first and second storage containers to be:
returned to the multi-container frame; or
stored in a new, same multi-container frame.

13. A computer-readable medium comprising instructions which, when executed by a computer, cause the computer to carry out the method of any preceding claim, or
a computer program comprising instructions which, when the program is executed by a computer, cause the computer to carry out the method of any preceding claim.

14. A controller comprising a processor and a memory, the controller configured to perform the method of any of claims 1-13.

15. An automated storage and retrieval system comprising:
a first storage container;
a second storage container;
a multi-container frame;
a container-handling vehicle configured to move the first and second storage containers; and
the controller of claim 14.
